# EUROPÄISCHE PATENTSCHRIFT

(11) **EP 2 786 684 B1**
(45) Veröffentlichungstag und Bekanntmachung des Hinweises auf die Patenterteilung: **02.01.2019**
(21) Anmeldenummer: 14000493.8
(22) Anmeldetag: 12.02.2014
(51) Int. Cl.: A47J 37/04, A47J 37/06

(54) **Grillvorrichtung zum Grillen von Grillgut**
A grilling device for grilling grilled goods
Dispositif de grillade pour griller des produits à griller

(30) Priorität: 05.04.2013 DE 102013005730; 06.12.2013 DE 102013020112
(43) Veröffentlichungstag der Anmeldung: 08.10.2014
(73) Patentinhaber: Ferieninsel Thomas Lange e.K., 56333 Winningen (DE)
(72) Erfinder: Lange, Thomas, 56333 Winningen (DE)
(74) Vertreter: Preusche, Rainer

(56) Entgegenhaltungen:
- GB-A- 2 180 736
- US-A- 2 482 601
- US-A- 4 062 983

## Beschreibung

Die Erfindung betrifft eine Grillvorrichtung zum Grillen von Grillgut, insbesondere Geflügel.

Aus dem Stand der Technik sind Grillvorrichtungen bekannt, welche als Spieß ausgebildet sind. Diese langen Grillspieße werden mit eng aneinander gepresstem Grillgut, wie beispielsweise Grillhähnchen bestückt, um anschließend in horizontaler Ausrichtung in einem Heizgerät angeordnet zu werden. In der Regel weisen derartige Heizgeräte mehrere bestückte Spieße auf, welche vertikal übereinander angeordnet sind. Dies erweist sich als nachteilig, da während des Grillvorgangs vom obersten Spieß Fleischsäfte und Fett auf die darunter liegenden Spieße tropfen. Hierdurch wird eine Geschmacksbeeinflussung des darunter liegenden Grillgutes bedingt.

Darüber hinaus sind derartige horizontal angeordnete Grillspieße nachteilig, wenn der Spieß an oberster Stelle mit frischem Geflügelfleisch bestückt wird, und folglich rohe Fleischsäfte auf das darunter liegende, fertige Grillgut auftropfen, so dass mögliche Gesundheitsgefahren bedingt sein können.

Darüber hinaus erweisen sich die horizontal angeordneten Grillspieße als nachteilig, wenn diese mit unterschiedlich großem Grillgut bestückt werden. Dies bedingt zusätzliche Arbeitsschritte, wenn beispielsweise ein kleines, fertig gegrilltes Grillhähnchen vom Grill entnommen werden muss, um eine saftige Fleischqualität zu gewährleisten und die anderen größeren Grillhähnchen aber noch weiter zu grillen sind. Die unfertigen Grillhähnchen sind folglich von dem horizontalen Grillspieß abzunehmen, und nach Entnahme des fertigen, kleine Grillhähnchens wieder aufzuspießen und weiter zu grillen. Dies ist zeit- und arbeitsaufwendig.

Darüber hinaus erweisen sich bekannte Grillspieße als nachteilig, da das daran angeordnete Grillgut bereits im rohen Zustand geklammert werden muss, um das Grillgut an den Grillspießen zu fixieren. Beispielsweise erfolgt eine derartige Klammerung bei Grillhähnchen an den Flügeln bzw. den Schenkeln. Wird nun ein fertig gegrilltes Grillgut vom Spieß abgenommen, kommt es zu einer Verschiebung bzw. Verletzung der Haut durch das Lösen der besagten Klammerung.

US 2 482 601 A offenbart ein Grillgerät mit Gasbrennern und zentralem Spieß sowie umlaufenden Spießen. Anstelle der Spieße, die vor allem für Grillgut ausgelegt sind, ist auch ein modifizierter Artikelhalter denkbar. Diese Artikelhalter sind im Prinzip Aufsätze anstelle der Spieße, welche Seitenelemente sowie segmentierte Regalelemente umfassen. Zudem sind Verbindungselemente dargestellt. Diese Artikelhalter sind vor allem für verschiedene heiße Gerichte, Kuchen oder Brot gedacht. Die Verbindungselemente sind lediglich am oberen und am unteren Ende des Artikelhalters angeordnet. Nachteilig dabei ist, dass die Seitenelemente keine weiteren Verbindungen aufweisen und für das Unterbringen der Gerichte lediglich segmentierte Regalelemente angeordnet sind. Auf diese Weise ist eine Verformung möglich, sodass beispielsweise eingeschobene Bleche nicht mehr halten. Zudem ist das Anordnen weiterer Grillgutträgerelemente beschränkt und erfordert ein gewisses Fingerspitzengefühl.

Dies bedingt für das Zuführen oder das Entfernen von Grillgut einen nicht unerheblichen Zeitfaktor. US 4 062 983 A beschreibt in einer Warmhaltevorrichtung eine um eine vertikale Achse drehbare Vorrichtung 15 mit zwei Halterahmenelementen 53 und 54.

Demzufolge liegt der vorliegenden Erfindung die Aufgabe zugrunde, ein einfaches, zeitsparendes und hygienisch unbedenkliches Grillen von Grillgut unter Energieeinsparung zu ermöglichen. Zudem ist es Aufgabe der vorliegenden Erfindung eine schnelle Entnahmemöglichkeit von fertigem Grillgut sowie eine schnelle Neubestückung mit rohem Grillgut zu ermöglichen. Ferner ist es Aufgabe der vorliegenden Erfindung, eine platzsparende Grillvorrichtung bereitzustellen.

Diese Aufgabe wird gemäß den Merkmalen des Patentanspruches 1 gelöst.

Die vorliegende Erfindung umfasst eine Grillvorrichtung zum Grillen von Grillgut, insbesondere Geflügel, umfassend wenigstens einen Halterahmen, umfassend ein Halterahmenelement sowie zwei Verbindungselemente, welche über das Halterahmenelement voneinander beabstandet angeordnet sind, sowie wenigstens ein Grillgutträgerelement zur Aufnahme des Grillgutes, wobei die Grillvorrichtung während des Grillvorgangs um eine vertikale Längsachse rotierbar ausgebildet ist. Die Anordnung von Halterahmenelement und den beiden daran anschließenden Verbindungselementen ist U-förmig ausgebildet, wobei sich während des Grillvorgangs eine seitliche Öffnung des Halterahmens bedingt. Dies ist vorteilhaft, da hierdurch besonders leicht ein Bestücken der Grillvorrichtung bzw. des wenigstens eines Grillgutträgerelements mit Grillgut erfolgen kann. Bevorzugt sind Halterahmen, Halterahmenelement sowie die beiden Verbindungselemente aus Metall, beispielsweise aus Edelstahl oder Aluminium, ausgebildet. Darüber hinaus ist denkbar, dass die Oberfläche des Halterahmens physikalisch und/oder chemisch modifiziert ausgebildet ist und beispielsweise oberflächenbehandelt und/der oberflächenbeschichtet eingesetzt werden. Dies ist insbesondere bei dem Kontakt mit Lebensmitteln von Vorteil, da durch die Oberflächenbehandlung das Bakterienwachstum sowie das Pilzwachstum gehindert wird, sodass der Halterahmen antimikrobiell und/oder desinfizierbar ist.

Während des Grillvorgangs ist die hier beschriebene Grillvorrichtung um eine vertikale Längsachse rotierbar ausgebildet. Unter Längsachse ist hierbei diejenige Achse zu verstehen, in welcher die Grillvorrichtung ihre längste geometrische Ausdehnung aufweist. Bevorzugt ist die Längsachse gleichzeitig die zentrale Mittelachse der Grillvorrichtung. Durch die Rotation der Grillvorrichtung um eine vertikale Längsachse wird ein gleichmäßiges Grillen des Grillguts ermöglicht. Es handelt sich folglich um eine vertikale Grillvorrichtung.

Vorteilhafte Ausführungsformen ergeben sich aus den Unteransprüchen. Bei einer vorteilhaften Ausführungsform sind mehrere Grillgutträgerelemente vertikal voneinander beabstandet an dem Halterahmen angeordnet. Dies ist vorteilhaft, da insbesondere jedes Grillgutträgerelement bevorzugt ein Grillgut, beispielsweise ein Grillhähnchen, aufnimmt. Sind mehrere derartige Grillgutträgerelemente an dem Halterahmen angeordnet, können mehrere Grillhähnchen gleichzeitig gegrillt werden.

Bevorzugt sind die Grillgutträgerelemente derart voneinander beabstandet angeordnet, dass die jeweiligen Grillgüter zueinander kontaktfrei angeordnet sind. Dies ist vorteilhaft, da somit das Grillgut von allen Seiten gegrillt werden kann und rohe Halsbereiche, wie sie durch das enge bestücken der Grillspieße aus dem Stand der Technik bekannt sind, vermieden werden. Dies ist zusätzlich vorteilhaft, da durch die Beabstandung des Grillguts voneinander einer schnelle Entnahme von jedem einzelnen Grillgut sowie eine schnelle Neubestückung mit rohem Grillgut ermöglicht wird. Je nach Grillgutgröße kann das Grillgut, insbesondere ein Grillhähnchen, einzeln der Grillvorrichtung entnommen werden, ohne dass das restliche Grillgut hierdurch beeinträchtigt wird. Ist ein kleineres Grillhähnchen gar, so kann es direkt entnommen werden, um eine saftige Fleischqualität zu gewährleisten. Das restliche Grillgut, also größere, schwerere Grillhähnchen, welche noch nicht gar sind, verbleiben derweil in der Grillvorrichtung und werden weiter gegrillt. Dies bringt sowohl einen Zeitvorteil als auch einen reduzierten Arbeitsaufwand mit sich.

Bevorzugt erfolgt die Fixierung des wenigstens einen Grillgutträgerelementes an dem Halterahmen durch Verschweißen oder Vernieten. Darüber hinaus ist auch denkbar, das wenigstens eine Grillgutträgerelement lösbar anzuordnen, sodass dieses jederzeit von dem Halterahmen entnehmbar ausgebildet ist. Dies ist vorteilhaft, da das wenigstens eine Grillgutträgerelement somit leicht zu reinigen und zu säubern ist. So ist beispielsweise denkbar, dass das wenigstens eine Grillgutträgerelement an dem Halterahmen durch Rastmechanismen, Klickmechanismen oder auch durch einfache Führungsnuten lösbar angeordnet ist. Ferner ist darüber hinaus denkbar, dass das wenigstens eine Grillgutträgerelement mit dem Halterahmen verschraubbar und/oder mittels Schnellverschlüssen lösbar daran angeordnet ist. Insbesondere eine lösbare Fixierung mittels Verschraubung stellt die einfachste und schnellste Möglichkeit dar. Wird das wenigstens eine Grillgutträgerelement mit wenigstens einem Halterahmenelement lösbar verschraubt, umfasst das wenigstens eine Grillgutträgerelement vorteilhaft einen fest an dem Grillgutträgerelement angeordneten Fixierungsabschnitt.

Ferner ist denkbar, dass das Halterahmenelement eine Vielzahl an vertikal voneinander beabstandeten Öffnungen aufweist, durch welche das jeweilige Grillgutträgerelement zumindest abschnittsweise hindurchführbar ist. So erweist es sich beispielsweise als vorteilhaft, dass das wenigstens eine Grillgutträgerelement wenigstens einen, bevorzugt mehrere gekrümmt ausgebildete Vorsprünge aufweist, welche(r) weiterhin bevorzugt hakenartig ausgebildet ist. Der wenigstens eine nach außen hervorstehende Vorsprung ist durch wenigstens eine Öffnung des Halterahmenelements zumindest teilweise hindurchführbar und somit einhakbar. Durch dieses Einhaken ist eine schnelle und leichte Entnahme des Grillgutträgerelements gegeben.

Darüber hinaus ist es vorteilhaft, dass das wenigstens Grillgutträgerelement bevorzugt L-förmig ausgebildet ist. Insbesondere ein erster schenkelartiger Abschnitt, welcher im fixierten Zustand benachbart zu dem Halterahmenelement angeordnet ist, umfasst wenigstens einen Vorsprung. Dieser Vorsprung ist bevorzugt derart ausgebildet, dass er zumindest teilweise durch die wenigstens eine Öffnung des Halterahmenelements hindurchführbar ist. Bevorzugt der Vorsprung derart ausgebildet, dass er im zumindest teilweise durchgeführten Zustand durch wenigstens eine Öffnung das Halterahmenelement diese zumindest teilweise hintergreift. Vorteilhaft ist der Vorsprung als Haken, Imbus oder Steg mit einer endseitigen Materialverdickung ausgebildet. Durch die lösbare Anordnung des wenigstens einen, bevorzugt zwei Vorsprüngen, ist das jeweilige Grillgutträgerelement leicht anzuordnen bzw. auch wieder zu entfernen. Zudem ist diese lösbare Fixierung vorteilhaft, da somit in Abhängigkeit der Größe des Grillguts eine schnelle und einfache Höhenverstellung der Grillgutträgerelemente entlang des Halterahmenelements erfolgt. Neben den bereits beschriebenen Vorsprüngen sind auch weitere lösbare Fixierungsmechanismen denkbar, wie beispielsweise Querverriegelung und/oder Bajonettverschluss.

Bei einer weiteren vorteilhaften Ausführungsform umfasst das wenigstens Grillgutträgerelement wenigstens eine Grillgutträgerschale zur Aufnahme von Grillflüssigkeit während des Grillvorgangs. Dies ist insbesondere von Vorteil, da die Grillgutträgerschale die Fleischsäfte und das flüssige Fett, welches während des Grillens von dem Grillgut austritt, auffängt und ein Heruntertropfen auf weiteres, darunter angeordnetes Grillgut verhindert. Somit wird eine Geschmacksbeeinträchtigung ausgeschlossen und die Hygiene verbessert. Im einfachsten Fall ist die Grillgutträgerschale lösbar auf dem Grillgutträgerelemente angeordnet. Dies ermöglicht vorteilhaft eine schnelle Entnahme des fertigen Grillguts mit der Grillgutträgerschale sowie eine schnelle Neubestückung mit rohem Grillgut. In einem vorbereitenden Schritt werden die Grillgutträgerschalen mit bevorzugt jeweils einem Grillhähnchen bestückt, und bei Bedarf wird die fertige Grillgutträgerschale auf dem korrespondierendem Grillgutträgerelement angeordnet.

Zur lösbaren Anordnung der wenigstens einen Grillgutträgerschale auf dem wenigstens einen Grillgutträgerelement erweist es sich als vorteilhaft, wenn das Grillgutträgerelement eine zumindest teilweise umfangsseitige, sich in vertikaler Richtung erstreckende Erhebung aufweist. Diese bevorzugt als Randbereich ausgebildete Erhebung dient der Halterung der wenigstens einen Grillgutträgerschale und verhindert deren Abrutschen von dem Grillgutträgerelement während des Grillvorgangs. Neben derartigen Erhebungen sind auch weitere Halterungselemente denkbar, wie beispielsweise Führungsnuten oder anderweitige Vertiefungen, welche die wenigstens eine Grillgutträgerschale während des Grillvorgangs auf dem Grillgutträgerelement halten.

Bevorzugt umfasst jedes vorgesehene Grillgutträgerelement eine korrespondierende Grillgutträgerschale. Die Grillgutträgerschalen sind bevorzugt aus Metall, beispielsweise Edelstahl oder Aluminium, oder auch aus hitzebeständigem Kunststoff ausgebildet.

Ferner wäre es auch denkbar, das wenigstens ein Grillgutträgerelement netzförmig und/oder schwammartig auszubilden, so dass Fleischsäfte und flüssiges Fett von dem wenigstens einem Grillgutträgerelement aufnehmbar und speicherbar sind. Hierzu kann das wenigstens eine Grillgutträgerelement beispielsweise mehrlagig ausgebildet sein und zwei netzartige Deckschichten, beispielsweise aus Metall, sowie eine dazwischen angeordnete Saugschicht, bevorzugt aus natürlichen und/oder künstlichen Materialien wie beispielsweise Vlies, Fasern oder aufgeschäumten Kunststoffen, umfassen.

Bei einer weiteren vorteilhaften Ausführungsform weist die wenigstens eine Grillgutträgerschale einen sich nach oben erweiternden, umfangsseitig erstreckenden Randbereich auf. Die wenigstens eine Grillgutträgerschale weist somit eine sich nach oben erweiternde Öffnung auf, welche bevorzugt einen Durchmesser von 10 - 30 cm, bevorzugt von 12 - 22 cm, aufweist. Die im Vergleich zur Öffnung kleinere Grundfläche der Grillgutträgerschale weist bevorzugt einen Durchmesser im Bereich von 8 - 25 cm, mehr bevorzugt von 10 - 20 cm, auf. Je nach Art des Grillguts kann der zwischen Randbereich und Grundfläche angeordnete Mantelbereich unterschiedlich hoch ausgebildet sein. Selbstverständlich ist auch denkbar, dass Öffnung und Grundfläche den gleichen Durchmesser aufweisen oder auch, dass die Öffnung kleiner als die Grundfläche ausgebildet ist. Dies ist vorteilhaft, da ein sich konisch nach oben verjüngender Mantelbereich als Spritzschutz wirkt und Fleischsäfte und Fette spritzsicher aufgefangen werden. Wird auf eine separate Grillgutträgerschale verzichtet, so ist das wenigstens eine Grillgutträgerelement selbst als Grillgutträgerschale ausgebildet und weist eine sich nach oben erweiternde Öffnung auf, welche bevorzugt einen Durchmesser von 10 - 30 cm, bevorzugt von 12 - 22 cm, aufweist. Die im Vergleich zur Öffnung kleinere Grundfläche des schalenartigen Grillgutträgerelements weist bevorzugt einen Durchmesser im Bereich von 8 - 25 cm, mehr bevorzugt von 10 - 20 cm, auf. Je nach Art des Grillguts kann der zwischen Randbereich und Grundfläche angeordnete Mantelbereich unterschiedlich hoch ausgebildet sein. Selbstverständlich ist auch denkbar, dass Öffnung und Grundfläche den gleichen Durchmesser aufweisen oder auch, dass die Öffnung kleiner als die Grundfläche ausgebildet ist.

Bei einer weiteren vorteilhaften Ausführungsform umfasst das wenigstens eine Grillgutträgerelement wenigstens ein Positionierungsmittel zur lösbaren Anordnung wenigstens eines Stützelements innerhalb des Grillgutträgerelements. Bevorzugt weist die wenigstens eine Grillgutträgerschale ein derartiges Positionierungsmittel zur lösbaren Anordnung wenigstens eines Stützelements innerhalb der Grillgutträgerschale auf. Dies ist vorteilhaft, da die Grillgutträgerschale für ein gleichmäßiges Grillen und Durchgaren des Grillgutes nicht ausreicht, da immer eine Seite des Grillgutes aufliegt und somitschlecht bzw. gar nicht mitgegrillt wird. Aus diesem Grund ist es besonders vorteilhaft, wenigstens ein Stützelement vorzusehen, auf welchem das Grillgut angeordnet ist. Um das Stützelement an dem Grillgutträgerelement, bevorzugt an der Grillgutträgerschale, lösbar zu fixieren, ist vorteilhaft, wenigstens ein Positionierungsmittel vorgesehen, mittels welchem das Stützelement in der bestmöglichen Grillposition für das Grillgut lösbar angeordnet werden kann.

Bei einer weiteren vorteilhaften Ausführungsform umfasst das Stützelement wenigstens eine Bodenplatte sowie eine daran angeordnete schaftartige Verlängerung. Dies ist vorteilhaft, da bevorzugt die Bodenplatte als Kontaktfläche zu dem entsprechenden Grillgutträgerelement, bevorzugt zu der Grillgutträgerschale, ausgebildet ist und somit zur Stabilisierung des gesamten Stützelementes dient. Die an der Bodenplatte angeordnete schaftartige Verlängerung weist eine sich in vertikaler Richtung nach oben erstreckende Verlängerung auf, auf welche das Grillgut bevorzugt von oben nach unten aufsteckbar ist. Folglich ist das Grillgut, insbesondere das Grillhähnchen, in dieser Ausführungsform ebenfalls vertikal in seiner Längsrichtung angeordnet. Durch die schaftartige Verlängerung ist das Grillgut bevorzugt kontaktfrei mit dem Grillgutträgerelement, bevorzugt mit der Grillgutträgerschale, ausgebildet, sodass ein gleichmäßiges, schnelles Grillen und Durchgaren ermöglicht wird, wenn sich die Grillvorrichtung während des Grillens um seine vertikale Längsachse rotiert.

Ferner erweist es sich als vorteilhaft, jedem Grillgutträgerelement lediglich ein Stützelement zuzuweisen, sodass folglich zu jedem Grillgutträgerelement auch nur ein Grillgut anordbar ist. Dies ist vorteilhaft, da durch das aufrechte Grillen des Grillguts der Grillvorgang verkürzt werden kann, da im Gegensatz zu den bekannten, voll bestückten Spießen aus dem Stand der Technik das Grillgut auch im Hals- und Brustbereich gleichmäßig mitgegart werden kann. Im Stand der Technik erweist sich der vollbestückte Grillspieß häufig als nachteilig, da insbesondere Hals- und Oberbrustbereich des Grillhähnchens durch das direkt benachbart angeordnete, weitere Grillhähnchen abgeschirmt werden, sodass längere Grillzeiten bedingt werden, wodurch auch die Fleischqualität leidet und das Hühnerfleisch austrocknet.

Ferner ist denkbar, die schaftartige Verlängerung im einfachsten Ausführungsbeispiel zylindrisch auszubilden, wobei das freie nach oben gerichtete Ende geschlossen und bevorzugt als Halbkugel abgerundet ausgebildet ist. Darüber hinaus ist auch denkbar, dass die schaftartige Verlängerung als eine sich nach unten erweiternden Glockenform ausgebildet ist, sodass das Grillgut eine möglichst große gemeinsame Kontaktfläche mit der schaftartigen Verlängerung aufweist. Dies ist vorteilhaft, da hierdurch die Grillzeiten ebenfalls verkürzt werden. Selbstverständlich ist die Ausbildung der schaftartigen Verlängerung nicht auf die zylindrische oder glockenförmige Form beschränkt, sondern ist beliebig nach Form des Grillguts veränderbar. Darüber hinaus ist denkbar, dass mehrere schaftartige Verlängerungen vorgesehen sind, bevorzugt zwei bis acht, mehr bevorzugt drei bis fünf. In einer bevorzugten Ausführungsform sind diese schaftartigen Verlängerungen zylindrisch ausgebildet und weisen bevorzugt ein einseitig abgeschrägtes, nach oben ragendes freies Ende auf. Dies ist besonders vorteilhaft bei der Anordnung des Grillgutes und dessen Fixierung während des Grillvorgangs. Weiterhin bevorzugt sind die freien Ende Richtung der schaftartigen Verlängerungen zur vertikalen Mittelachse des Grillgutträgerelements hin abgeschrägt.

Bevorzugt weist die schaftartige Verlängerung eine vertikale Länge im Bereich von 7 - 25 cm, bevorzugt von 10 -18 cm, auf und eine horizontale Breite im Bereich von 2 - 8 cm, bevorzugt im Bereich von 3 - 6 cm.

Bei einer weiteren vorteilhaften Ausführungsform ist das wenigstens eine Positionierungsmittel als wenigstens ein sich vertikal nach oben erstreckenden Vorsprung, bevorzugt mehrere derartiger Vorsprünge, welche voneinander beabstandet angeordnet sind, ausgebildet. Bevorzugt ist der wenigstens eine sich vertikal nach oben erstreckende Vorsprung eckig, pyramidal oder auch abgerundet ausgebildet. Bevorzugt sind mehrere derartiger Vorsprünge vorgesehen, um eine stabile Fixierung des Stützelements an dem Grillgutträgerelement zu ermöglichen. Bevorzugt ist wenigstens ein derartiger Vorsprung, mehr bevorzugt 2 - 15 derartiger Vorsprünge, meist bevorzugt 3 - 7 derartige Vorsprünge vorgesehen, welche in unterschiedlichen Geometrien angeordnet sein können. So ist beispielsweise denkbar, dass mehrere Vorsprünge in Reihe, in einer Kreisform, als Rechteck oder in jeder anderen möglichen Geometrie angeordnet sind.

Bei einer weiteren vorteilhaften Ausführungsform weist das wenigstens eine Stützelement wenigstens eine Ausnehmung auf, welche komplementär zu dem wenigstens einen Positionierungsmittel des Grillgutträgerelements, bevorzugt der Grillgutträgerschale, ausgebildet ist, sodass Letzteres zur lösbaren Fixierung von Stützelement und Grillgutträgerelement, bevorzugt an Grillgutträgerschale, aneinander zumindest teilweise in die wenigstens eine Ausnehmung einführbar ist. Dies ist vorteilhaft, da somit eine lösbare Fixierung von Stützelement und Grillgutträgerelement, bevorzugt Grillgutträgerschale, vorgesehen ist. Bevorzugt ist die wenigstens eine Ausnehmung in der Bodenplatte des Stützelements vorgesehen oder aber auch direkt an dem unteren freien Ende der schaftartigen Verlängerung. Je nach Ausbildung der Positionierungsmittel ist denkbar, dass für jedes Positionierungsmittel eine hierzu komplementär ausgebildete Ausnehmung im Stützelement vorgesehen ist. Darüber hinaus ist auch denkbar, dass mehrere Positionierungsmittel in nur einer Ausnehmung anordbar sind.

Bevorzugt sind Stützelement, Grillgutträgerelement, Grillgutträgerschale sowie Positionierungsmittel aus Metall ausgebildet, bevorzugt aus Edelstahl oder Aluminium. Zur besseren Reinigung ist ferner denkbar, die Oberfläche der Elemente und/oder des Positionierungsmittels physikalisch und/oder chemisch zu modifizieren.

Bei einer weiteren vorteilhaften Ausführungsform ist das Stützelement bevorzugt Wärme leitfähigem Material ausgebildet. Dies ist insbesondere vorteilhaft, da somit das Grillgut nicht nur von außen mit Wärme beaufschlagt wird, sondern zeitgleich auch von innen heraus gegart wird. Hierzu ist es von Vorteil, wenn die schaftartige Verlängerung des Stützelements zumindest teilweise, bevorzugt vollständig, eine direkte Kontaktfläche mit dem Grillgut aufweist. Dies ist allerdings nicht zwangsläufig nötig, da auch die von der schaftartigen Verlängerung emittierten Wärmestrahlung indirekt zum Garvorgang beiträgt. Hierdurch wird die Grillzeit verkürzt, da das Grillgut nicht nur von außen, sondern von innen eine Temperaturbeaufschlagung erfährt. Bevorzugt ist die geometrische Form der schaftartigen Verlängerung der innenliegenden Fläche des Grillguts, welche mit der schaftartigen Verlängerung zumindest teilweise eine gemeinsame Kontaktfläche aufweist, angepasst.

Durch die vorteilhafte direkte und/oder indirekte Temperaturzuführung von innen erfolgt ein gleichmäßiges, sanftes Garen des Grillgutes, sodass die Grillzeiten verkürzt werden.

Darüber hinaus ist denkbar, dass das Stützelement, bevorzugt die wenigstens eine schaftartige Verlängerung, wenigstens einen Temperatursensor aufweist, welcher zur Temperaturerfassung im Innenraum des Grillgutes dient. Hierdurch wird der Grillvorgang effektiver gestaltet, da beispielsweise ab einem bestimmten Temperaturschwellwert im Innenraum des Grillguts festgestellt werden kann, wann die Garzeit erreicht wird und das Grillgut nicht trocken gegrillt wird.

Ferner erweist es sich als vorteilhaft, bei mehreren schaftartigen Verlängerungen in jeder der schaftartigen Verlängerungen wenigstens einen Temperatursensor vorzusehen. Dies ist vorteilhaft für die Ermittlung des gleichmäßigen Garprozesses und der Ermittlung, wann das Grillgut fertig durch gegart ist. Darüber hinaus ist denkbar, dass das Stützelement, bevorzugt die wenigstens eine schaftartige Verlängerung oder auch mehrere schaftartige Verlängerungen, wenigstens ein Heizelement aufweist/aufweisen, welches innerhalb der jeweiligen schaftartigen Verlängerung zum indirekten Grillen vorgesehen ist. Durch dieses wenigstens eine Heizelement, welches beispielsweise als Heizdraht ausgebildet ist, wird das Grillgut von innen mit einer zusätzlichen Temperatur beaufschlagt, sodass der Grillvorgang schneller abgeschlossen ist. Dies ist zudem vorteilhaft, da Verbrennungen und Austrocknen des Fleisches verhindert wird.

In einer weiteren Ausführungsform wird ein Grillgerät zum Grillen von Grillgut, insbesondere Geflügel, umfassend ein Grillgehäuse mit wenigstens einem Heizelement, wenigstens eine Grillvorrichtung nach wenigstens einem der voran gegangenen Ansprüche 1 - 9, wenigstens eine Antriebseinrichtung zur Rotation der Grillvorrichtung sowie wenigstens eine Aufnahmeeinrichtung zur lösbaren Fixierung der Grillvorrichtung an dem Grillgehäuse, beansprucht. Um die oben beschriebene Grillvorrichtung zu verwenden, bedarf es eines bevorzugt ausgebildeten Grillgehäuses mit wenigstens einem Heizelement.

Wird in einer ersten Ausführungsform das Grillgerät lediglich mit einer Grillvorrichtung bestückt, so ist das Grillgehäuse, welches die wenigstens eine Grillvorrichtung zumindest teilweise umgibt, bevorzugt U-förmig ausgebildet. Dies ist vorteilhaft, da somit während der Rotation der vertikalen Grillvorrichtung das Grillgut von drei Seiten mit Wärme beaufschlagt wird und eine Auskühlung nahezu verhindert wird. Vorteilhaft wird die Grillvorrichtung außerhalb des Grillgehäuses mit dem Grillgut bestückt und bevorzugt mittels Spannmechanismus oder Rastmechanismus an der Aufnahmeeinrichtung des Grillgehäuses fixiert, um dann mittels der wenigstens einen Antriebseinrichtung, beispielsweise eines Motors, in Rotation versetzt zu werden.

Sind mehrere Grillvorrichtungen vorgesehen, welche bevorzugt nebeneinander im gleichen Abstand zueinander angeordnet sind, so ist das Grillgehäuse bevorzugt als flächiges Wandelement ausgebildet, in welchem das wenigstens eine, bevorzugt mehrere Heizelemente verlaufen. Vorteilhaft ist der Grillgehäuse an seiner nicht beheizten, offenen Vorderseite mit wenigstens einem beweglichen, scheibenartigem Element verschließbar angeordnet. Bevorzugt ist das scheibenartige Element als Seitenfläche des Grillgehäuses schwenkbar ausgebildet, so dass der Grillraum innerhalb des Grillgehäuses, in welchem die wenigstens eine Grillvorrichtung angeordnet ist, verschließbar ist. Dies ist vorteilhaft, da somit die von den Heizelementen abgegebene Wärme innerhalb des Grillgehäuses gehalten wird und der Grillvorgang somit schneller und effizienter erfolgt.

Ferner wäre denkbar, dass das Grillgehäuse zwei derartige flächige Wandelemente aufweist, welche bevorzugt parallel zueinander beabstandet angeordnet sind und zwischen welchen die vertikal rotierenden Grillvorrichtungen angeordnet sind. Dies ist vorteilhaft, da durch die beidseitige Temperaturbeaufschlagung in Kombination mit der Rotation um die vertikale Längsachse jeder Grillvorrichtung ein schnelles und kostensparendes Grillen ermöglicht ist.

Als Antriebseinrichtung zur Rotation der Grillvorrichtung ist bevorzugt ein Motorantrieb vorgesehen oder auch ein Ketten- oder Bandantrieb denkbar. Sind mehrere Grillvorrichtungen vorgesehen, so erweist es sich als vorteilhaft, die in Reihe zueinander angeordneten Grillvorrichtungen mittels Bandantrieb, beispielsweise mittels eines Zahnriemens, alle mit der gleichen Rotationsgeschwindigkeit zu beaufschlagen. Ferner ist auch denkbar, dass die einzelnen in Reihe zueinander angeordneten Grillvorrichtungen mit jeweils einem Antrieb ausgestattet sind, so dass in Abhängigkeit des Grillgutes die einzelnen Grillvorrichtungen mit verschiedenen Rotationsgeschwindigkeiten beaufschlagt werden. Je nach Ausführungsform ist die Antriebseinrichtung am vertikal oberen Ende und/oder am vertikal unteren Ende der Grillvorrichtung anordbar.

Die Fixierung der jeweiligen Grillvorrichtung an der Aufnahmeeinrichtung erfolgt bevorzugt mittels Schraubmechanismus, Klickmechanismus oder auch Bajonettmechanismus. Darüber hinaus ist denkbar, dass die jeweilige Grillvorrichtung an dem Halterahmen wenigstens einer Aussparung aufweist, welche bevorzugt von einem Haltemittel, beispielsweise ein hakenartiges Element, zumindest teilweise umgriffen wird, so dass die jeweilige Grillvorrichtung über das Haltemittel mit der Aufnahmeeinrichtung verbunden ist. Hierbei umfasst die Grillvorrichtung zudem vorteilhaft weiterhin wenigstens einen Vorsprung an dem der Antriebseinrichtung gegenüberliegenden freien Ende. Bevorzugt ist dieser wenigstens eine Vorsprung stiftartig und/oder stegartig ausgebildet und kann beispielsweise einen runden Querschnitt oder einen ellipsoidalen Querschnitt aufweisen. Ferner ist vorteilhaft, dass der wenigstens eine Vorsprung fest an dem entsprechenden Verbindungselement angeordnet ist. Meist bevorzugt ist der wenigstens eine Vorsprung als Führungspin und/oder Widerlager ausgebildet. Dies ist bevorzugt, da somit eine vertikale Rotation der Grillvorrichtung während des Grillvorgangs ermöglicht wird. Vorteilhaft erfolgt die Lagerung der Grillvorrichtung derart, dass keine exzentrischen Kräfte bedingt werden.

Vor der Bestückung der Grillvorrichtung mit Grillgut wird der wenigstens eine Vorsprung der Grillvorrichtung zunächst in eine hierzu bevorzugt komplementär ausgebildete Ausnehmung und/oder Öffnung des Grillgerätes eingeführt. Um eine leichte, gleichmäßige Rotation zu gewährleisten, ist zwischen Vorsprung und Wandung der Ausnehmung und/oder der Öffnung des Grillgeräts ein zusätzliches freies Volumen vorgesehen, innerhalb welchem der wenigstens eine Vorsprung rotierbar ist. Meist bevorzugt sind pro Grillvorrichtung ein Vorsprung, welcher weiterhin bevorzugt als Führungspin und/oder als Widerlager ausgebildet ist, sowie eine hierzu komplementär ausgebildete Öffnung und/oder Ausnehmung vorgesehen. Dies bedingt eine einfache Rotation der Grillvorrichtung um die vertikale Längsachse. Je nach Ausführungsform kann der wenigstens eine Vorsprung an dem vertikal nach unten ausgerichteten freien Ende der Grillvorrichtung und/oder an dem vertikal nach oben ausgerichteten freien Ende der Grillvorrichtung angeordnet sein, wobei am anderen, gegenüberliegenden zweiten freien Ende der Grillvorrichtung bevorzugt die Aufnahmeeinrichtung bzw. die Antriebseinrichtung angeordnet ist.

Weiterhin bevorzugt ist, dass der Halterahmen der Grillvorrichtung ein Kupplungselement, bevorzugt eine Schnellkupplung, meist bevorzugt eine Rutschkupplung, aufweist, mittels welcher die Antriebseinrichtung in lösbarer Verbindung steht. Meist bevorzugt ist die Rutschkupplung mechanisch mit Reibkörpern, hydraulisch, elektrisch, magnetisch, als Riemenantrieb und/oder einer Kombination hieraus ausgebildet.

Darüber hinaus erweist es sich als vorteilhaft, wenn der Halterahmen aus aneinander lösbaren Einzelteilen zusammengesetzt ist. So ist beispielsweise denkbar, dass das Halterahmenelement lösbar an dem ersten und zweiten Verbindungselement anordbar ist. Die lösbare Fixierung ist bevorzugt als Steckverbindung, Schraubverbindung, Bajonettverbindung oder dergleichen ausgebildet. Diese Ausführung erweist sich als vorteilhaft, um das Halterahmenelement schnell zu entnehmen und beispielsweise zu reinigen oder zu desinfizieren.

Die hier beschriebene Grillvorrichtung zum Grillen von Grillgut ist neben Geflügel auch bevorzugt für Haxen, Backschinken oder dergleichen ausgebildet.

Ferner erweist es sich als vorteilhaft, die Grillgutträgerelemente mit einer speziell hierfür vorgesehenen Zange zu entnehmen. Die Zange ist hierfür derart ausgebildet, dass sie im gegriffenen Zustand die Bodenplatte in der Grillgutträgerschale derart fixiert, dass diese auch bei einer Schrägstellung der Grillgutträgerschale in dieser gehalten wird. Dies ist insbesondere von Vorteil, wenn aus dem Grillgut heraus gelaufene Flüssigkeit aus der Grillgutträgerschale abgeführt werden soll. Diese lösbare Fixierung ist unabhängig von dem Neigungswinkel der Grillgutträgerschale.

Vorteile und Zweckmäßigkeiten sind der nachfolgenden Beschreibung in Verbindung mit der Zeichnung zu entnehmen. Hierbei zeigen:
Fig. 1 einen schematischen Querschnitt einer nicht erfindungsgemässen Ausführungsform einer Grillvorrichtung;
Fig. 2 einen schematischen Querschnitt einer weiteren nicht erfindungsgemässen Ausführungsform einer Grillvorrichtung;
Fig. 3 eine schematische Seitenansicht einer weiteren nicht erfindungsgemässen Ausführungsform der Grillvorrichtung;
Fig. 4 einen schematischen Querschnitt einer erfindungsgemässen Ausführungsform einer Grillvorrichtung;
Fig. 5 eine Rückseitenansicht der in Fig. 4 gezeigten Ausführungsform;
Fig. 6 einen schematischen Querschnitt einer weiteren nicht erfindungsgemässen Ausführungsform einer Grillvorrichtung;
Fig. 7 einen Querschnitt eines beispielhaften Grillgutträgerelements mit darin angeordnetem Stützelement;
Fig. 8a, 8b eine weitere Ausführung eines Stützelements;
Fig. 9 ein beispielhaftes Grillgerät; und
Fig. 10 ein weiteres beispielhaftes Grillgerät.

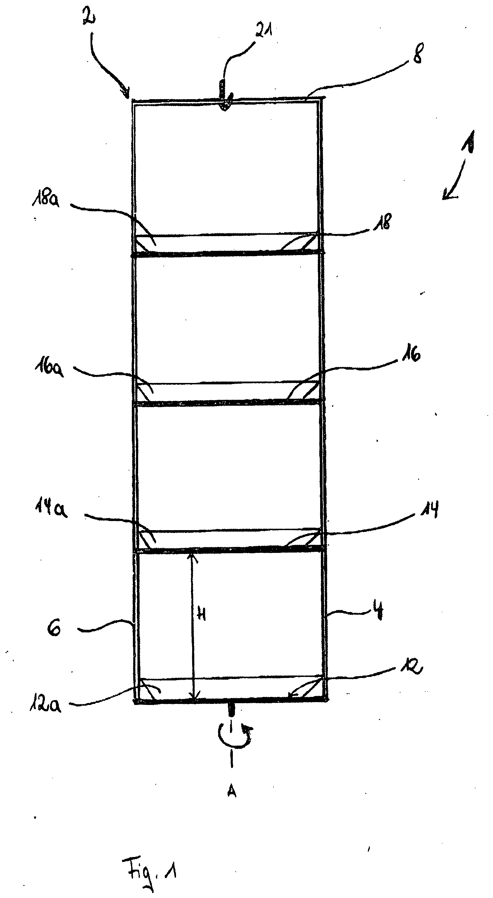

In Fig. 1 ist eine nicht erfindungsgemässe Ausführungsform einer Grillvorrichtung 1 gezeigt, wobei der Halterahmen 2 aus einem ersten Halterahmenelement 4 und einem zweiten Halterahmenelement 6 ausgebildet ist. Das erste Halterahmenelement 4 und das zweite Halterahmenelement 6 sind über ein Verbindungselement 8 fest aneinander fixiert und zugleich hierdurch voneinander beabstandet. Im einfachsten Fall ist zur Ausbildung des Halterahmens 2 ein erstes Grillgutträgerelement 12, welches gleichzeitig als weiteres Verbindungselement des ersten und zweiten Halterahmens 4, 6 dient, an der Unterseite angeordnet. Der Halterahmen 2 ist somit als Rechteck ausgebildet. Innerhalb des Halterahmens 2 sind weitere Grillgutträgerelemente 14, 16, 18 angeordnet. Dies ist allerdings beispielhaft zu verstehen, so dass die Grillvorrichtung 1 auch mehr als die hier gezeigten vier Grillgutträgerelemente 12, 14, 16, 18 aufweisen kann. Die vier Grillgutträgerelemente 12, 14, 16, 18 sind hier in der Seitenansicht gezeigt. Es hat sich als vorteilhaft erweisen, die Grillgutträgerelemente 12, 14, 16, 18 rund auszubilden. Selbstverständlich ist die Ausbildung der Grillgutträgerelemente 12, 14, 16, 18 nicht auf rund beschränkt, sondern kann beispielsweise auch eckig, ellipsoidal oder auch polygonal ausgebildet sein.

Auf den Grillgutträgerelemente 12, 14, 16, 18 ist jeweils eine Grillgutträgerschale 12a, 14a, 16a, 18a angeordnet. Die Grillgutträgerschalen 12a, 14a, 16a, 18a weisen einen sich nach oben erweiternden Querschnitt auf und dienen der Grillgutaufnahme während des Grillvorgangs. Die jeweilige Grillgutträgerschale 12a, 14a, 16a, 18a ist auf dem Grillgutträgerelement 12, 14, 16, 18 aufgestellt. Zur zusätzlichen Fixierung der jeweiligen Grillgutträgerschale 12a, 14a, 16a, 18a auf dem korrespondierenden Grillgutträgerelement 12, 14, 16, 18 kann Letzteres eine zumindest teilweise umfangsseitige, sich nach vertikal nach oben erstreckende Erhebung aufweisen, welche als Rand ausgebildet ist. Diese Erhebung (nicht gezeigt) verhindert ein Heruntergleiten der jeweiligen Grillgutträgerschale 12a, 14a, 16a, 18a während des Grillvorgangs. Selbstverständlich sind auch weitere Halterungsmöglichkeiten der Grillgutträgerschalen 12a, 14a, 16a, 18a denkbar, die zur lösbaren Fixierung der Grillgutträgerschalen 12a, 14a, 16a, 18a geeignet sind. Vorteilhaft sind die Grillgutträgerschalen 12a, 14a, 16a, 18a während des Grillvorgangs einzeln entnehmbar. Je nach Größe des Grillgutes ist die Höhe H zwischen zwei Grillgutträgerelementen 12, 14, 16, 18 variabel ausbildbar, wobei die Höhe H bevorzugt einen Abstand im Bereich von 10 - 30 cm, bevorzugt von 18 - 28 cm, aufweist.

Bevorzugt weist das Verbindungselement 8 eine Ausnehmung 19 (nicht gezeigt) auf, welche bevorzugt als umfangsseitige Nut ausgebildet ist. Weiterhin bevorzugt ist diese Ausnehmung 19 mittig an dem Verbindungselement 8 angeordnet, so dass die Ausnehmung 19 sowohl zu dem ersten Halterahmenelement 4 als auch zu dem zweiten Halterahmenelement 6 gleich beabstandet ist. Über diese Ausnehmung 19 ist die Grillvorrichtung 1 mit einem Haltemittel 21, welches bevorzugt als hakenartiges Element ausgebildet ist, lösbar an der Aufnahmeeinrichtung (nicht gezeigt) befestigt. Die Grillgutträgerelemente 12, 14, 16, 18 sind bei dieser Ausführungsform fest an den Halterahmenelementen 4, 6 und die Grillgutträgerschalen 12a, 14a, 16a, 18a entnehmbar angeordnet. Während des Grillvorgangs wird die Grillvorrichtung 1 um ihre vertikale Längsachse A in einer vorbestimmbaren Geschwindigkeit rotiert. Dies ermöglicht ein gleichmäßigen Grillen des Grillguts von allen Seiten.

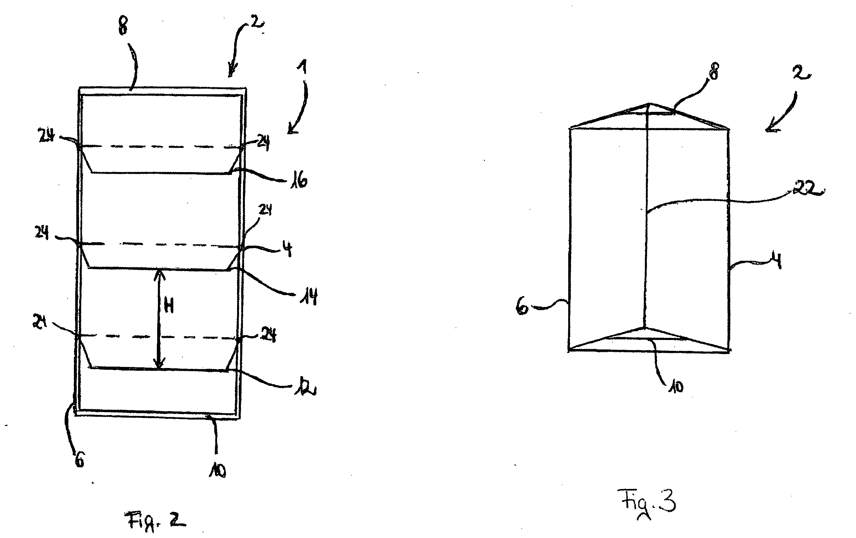

In Fig. 2 ist eine Ausführungsform einer weiteren nicht erfindungsgemässen Grillvorrichtung 1 gezeigt, wobei der Halterahmen 2 aus einem ersten Halterahmenelement 4 und einem zweiten Halterahmenelement 6 ausgebildet ist. Das erste Halterahmenelement 4 und das zweite Halterahmenelement 6 sind über ein Verbindungselement 8 fest aneinander fixiert und zugleich hierdurch voneinander beabstandet. Im einfachsten Fall ist ein weiteres Verbindungselement 10 an der Unterseite angeordnet, sodass der Halterahmen 2 als Rechteck ausgebildet ist. Innerhalb des Halterahmens sind beispielsweise drei Grillgutträgerelemente 12, 14, 16 angeordnet. Bei dieser Ausführung sind die Grillgutträgerelemente 12, 14, 16 selbst schalenförmig, sich nach oben erweiternd ausgebildet und weisen an den jeweiligen Randbereichen 24 wenigstens eine gemeinsame Kontaktfläche mit dem ersten Halterahmenelement 4 bzw. mit dem zweiten Halterahmenelement 6 auf. Je nach Größe des Grillgutes ist die Höhe H zwischen zwei Grillgutträgerelementen 12, 14, 16 variabel ausbildbar, wobei die Höhe H bevorzugt einen Abstand im Bereich von 10 - 30 cm, bevorzugt von 18 - 28 cm, aufweist. Je nach Größe der Grillvorrichtung können auch mehr als die dargestellten drei Grillgutträgerelemente 12, 14, 16 angeordnet sein, oder auch mehrere Halterahmenelemente vorgesehen sein (nicht gezeigt). Vorteilhaft weist wenigstens ein Verbindungselement 8 oder 10, bevorzugt beide, eine umfangsseitige Vertiefung, beispielsweise in Form einer Nut (nicht gezeigt). Bevorzugt ist diese Nut derart angeordnet, dass sie sowohl zu dem ersten Halterahmenelement 4 als auch zu dem zweiten Halterahmenelement 6 gleich beabstandet ist. Über diese Nut ist die Grillvorrichtung an der Aufnahmeeinrichtung, beispielsweise über ein Arretierungsmittel oder ein hakenartigen Element, lösbar befestigt. Die Grillgutträgerelemente 12, 14, 16 sind bei dieser Ausführungsform fest und/oder lösbar an den Halterahmenelementen 4, 6 angeordnet. Im bevorzugten Fall sind die schalenartig ausgebildeten Grillgutträgerelemente 12, 14, 16 aus der Grillvorrichtung 1 entnehmbar angeordnet. Dies ist vorteilhaft, da somit eine schnelle Entnahme des fertigen Grillguts und eine schnelle Neubestückung mit rohem Grillgut ermöglicht wird, ohne dass das restliche Grillgut hiervon beeinflusst wird.

In Fig. 3 ist eine schematische Seitenansicht einer weiteren nicht erfindungsgemässen Ausführungsform dargestellt, wobei der Halterahmen 2 ein erstes Halterahmenelement 4, ein zweites Halterahmenelement 6 sowie ein drittes Halterahmenelement 22 aufweist, wodurch die Form eines Prismas aufgespannt wird. In diesem Ausführungsbeispiel weisen die innerhalb des Halterahmens 2 angeordneten Grillgutträgerelemente 12, 14, 16 mit jedem der Halterahmenelemente 4, 6, 22 jeweils eine gemeinsame Kontaktfläche zur Fixierung auf, sodass sich pro Grillgutträgerelement 12, 14, 16 jeweils drei Kontaktflächen mit den jeweiligen Halterahmenelementen 4, 6, 22 bedingen. In diesem Ausführungsbeispiel sind die Kontaktflächen derart ausgestaltet, dass an den Halterahmenelementen 4, 6 Vertiefungen vorgesehen sind, in welche der Randbereich 24 eines jeden Grillgutträgerelements 12, 14, 16 zumindest teilweise hindurch führbar und darin anordbar ist. Bevorzugt sind die Ausnehmungen als Führungsnuten ausgebildet. Am dritten Halterahmenelement 22 ist zur zusätzlichen Fixierung bevorzugt ein radial nach innen ausgebildeter Vorsprung angeordnet, auf welchem der Randbereich 24 des jeweiligen Grillgutträgerelements 12, 14, 16 auflegbar ist. Selbstverständlich ist die Fixierung der Grillgutträgerelemente 12, 14, 16 nicht auf das hier beschriebene Beispiel beschränkt, sondern je nach Bedarf abänderbar. So ist beispielsweise auch eine nicht lösbare Anordnung mittels Vernietung oder Verschweißung denkbar.

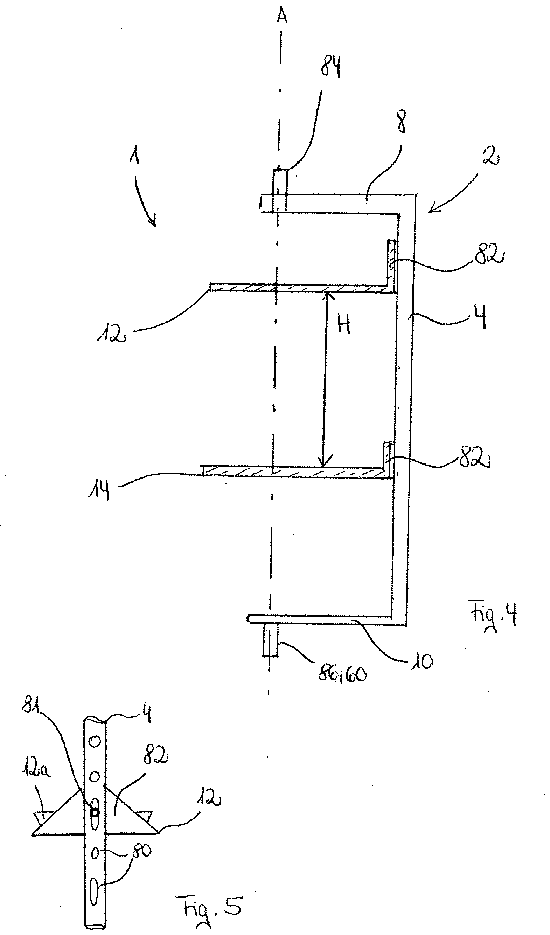

Fig. 4 zeigt einen schematischen Querschnitt einer erfindungsgemässen Grillvorrichtung 1 mit einem U-förmig ausgebildeten Halterahmen 2. Der Halterahmen 2 umfasst ein Halterahmenelement 4, welches zwei Verbindungselemente 8, 10 voneinander beabstandet. Ferner umfasst die dargestellte Ausführungsform einer Grillvorrichtung 1 zwei Grillgutträgerelemente 12, 14, welche hier allerdings lediglich zur Veranschaulichung zu verstehen sind. Selbstverständlich kann die hier gezeigte Grillvorrichtung 1 mehr als die zwei gezeigten Grillgutträgerelemente 12, 14 umfassen. Die Grillgutträgerelemente 12, 14 weisen jeweils einen Fixierungsabschnitt 82 auf, mittels welchem die Grillgutträgerelemente 12, 14 lösbar an dem Halterahmenelement 4, bevorzugt verschraubt, angeordnet sind. Durch die lösbare Anordnung kann die Höhe H zwischen den Grillgutträgerelementen 12, 14 beliebig variiert und in Abhängigkeit des zu grillenden Grillgutes stets verändert werden. Die Höhe H ist bevorzugt im Bereich von 10 - 30 cm, bevorzugt im Bereich von 18 - 28 cm, ausgebildet.

Das Verbindungselement 8 am oberen vertikalen Ende der Grillvorrichtung 1 weist ein Kupplungselement 84 auf, mittels welchem die Grillvorrichtung 1 an wenigstens eine Antriebseinrichtung (nicht gezeigt) lösbar anschließbar ist. Am unteren vertikalen freien Ende der Grillvorrichtung 1 weist das weitere Verbindungselement 10 wenigstens einen Vorsprung 86 auf, welcher meist bevorzugt als Führungspin und/oder als Widerlager 60 ausgebildet ist.

Selbstverständlich ist die Ausführung nicht hierauf beschränkt. Ist beispielsweise die Antriebseinrichtung in der Nähe des unteren vertikalen freien Endes der Grillvorrichtung vorgesehen, so ist die Anordnung von Kupplungselement 84 und Vorsprung 86 bzw. Widerlager 60 vertauscht.

Zudem sind die Grillgutträgerelemente 12, 14 in diesem Ausführungsbeispiel in ihrer Längsrichtung größer ausgebildet, so dass sie über die beiden Verbindungselemente 8, 10 hervorstehen. Dies ist von Vorteil, da somit die aufzunehmenden Grillgutträgerschalen (nicht gezeigt) standfest auf den Grillgutträgerelementen 12, 14 anordbar sind.

Die Rotation der hier in Fig. 4 gezeigten Grillvorrichtung 1 erfolgt um die Rotationsachse A, welche sich in Längsrichtung der Grillvorrichtung 1 zentral durch Kupplungselement sowie Vorsprung bzw. Widerlager erstreckt.

Fig. 5 zeigt eine schematische Rückansicht eines in Fig. 4 dargestellten Grillgutträgerelements 12, welches einen Fixierungsabschnitt 82 aufweist. Dieser ist beispielhaft in dreieckiger Geometrie dargestellt, aber selbstverständlich nicht hieraus beschränkt. Das weiterhin dargestellte Halterahmenelement 4 umfasst eine Vielzahl an Öffnungen 80, welche bevorzugt rund, oval, rechteckig oder in jeder polygonalen Form ausgebildet sind. Im einfachsten Fall sind die Öffnungen 80 im gleichen Abstand voneinander angeordnet. Es ist jedoch auch denkbar, dass manche Öffnungen 80 näher aneinander bzw. weiter voneinander entfernt angeordnet sind. Das Grillgutträgerelement 12 ist über den Fixierungsabschnitt 82 mit einem bevorzugt lösbar ausgebildeten Befestigungsmittel 81 an dem Halterahmenelement 4 angeordnet. Je nach Anforderung ist das Befestigungsmittel, welches bevorzugt als Schraube oder dergleichen ausgebildet ist, leicht zu lösen und der Fixierungsabschnitt 82 in einer anderen Höhenposition anordbar.

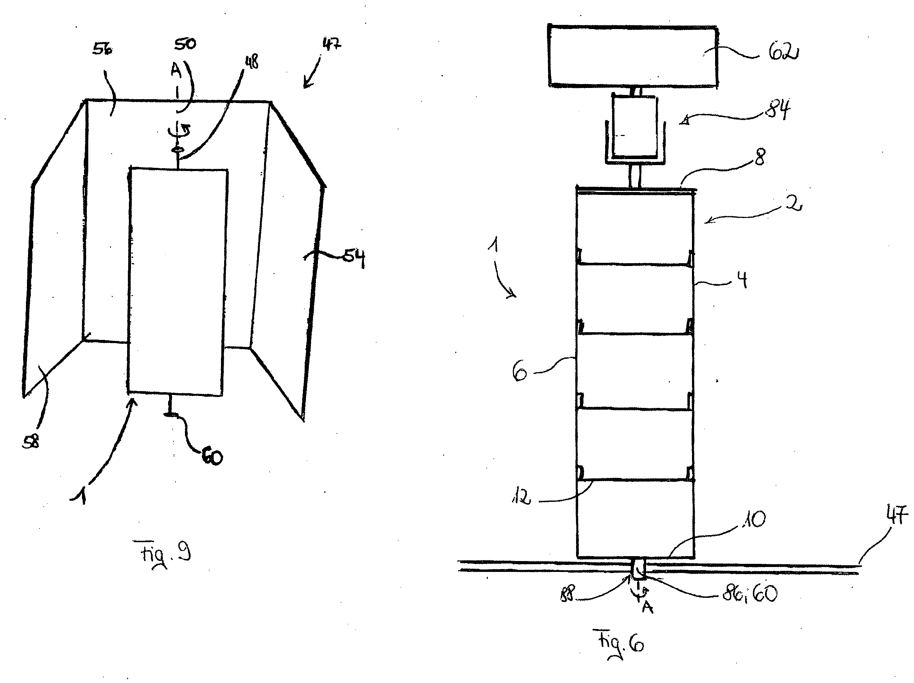

In Fig. 6 ist eine weitere mögliche Antriebsart der Grillvorrichtung 1 gezeigt. Der nicht erfindungsgemässe Halterahmen 2 umfasst hier ein erstes Halterahmenelement 4 sowie ein zweites Halterahmenelement 6, welche beide über ein erstes und zweites Verbindungselement 8, 10 einen rechteckigen Halterahmen 2 aufspannen. Zudem ist eine Antriebseinrichtung 62 gezeigt, welche über ein Kupplungselement 84 mit der Grillvorrichtung 1 in lösbarer Verbindung steht. Bevorzugt ist das Kupplungselement 84 in diesem Beispiel als Schnellkupplung, meist bevorzugt als Rutschkupplung, ausgebildet. Am unteren freien vertikalen Ende der Grillvorrichtung 1 ist wenigstens ein Vorsprung 86 und/oder ein Widerlager 60 angeordnet, welches in eine komplementär dazu ausgebildete Öffnung 88 des Grillgerätes einführbar ist. Während des Grillvorgangs erfolgt eine Rotation der Grillvorrichtung 1 um die Rotationsachse A.

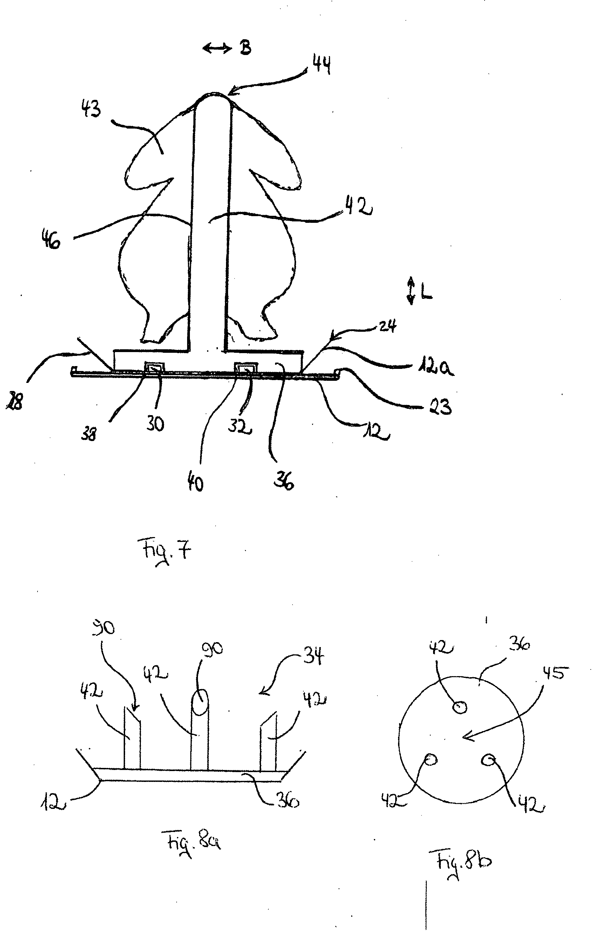

In Fig. 7 ist ein schematischer Querschnitt eines Teils einer Grillvorrichtung 1 gezeigt. Das Grillträgerelement 12 weist umfangsseitig zumindest teilweise eine Erhebung 23 auf, welche als Begrenzungsmittel dient und die auf dem Grillgutträgerelement 12 angeordnete Grillgutträgerschale 12a vor dem Verrutschen bzw. Herabgleiten während des Grillvorgangs schützt. Die Grundfläche der Grillgutträgerschale 12a weist einen geringeren Durchmesser als die nach oben gerichtete Öffnung auf, so dass sich ein konisch nach oben erweiternder Mantelbereich 28 bedingt, welcher mit einem umfangsseitig angeordneten Randbereich 24 abschließt. Die Grillgutträgerschale 12a weist bevorzugt zwei Positionierungsmittel 30 und 32 auf, welche als sich vertikal nach oben erstreckende Vorsprünge ausgebildet sind. In dieser Ausführungsform sind die Vorsprünge mit einem eckigen Querschnitt gezeigt. Diese sind natürlich nicht hierauf begrenzt, sondern können auch in jeglicher anderer Geometrie, beispielsweise als nach oben spitz zulaufendes Dreieck oder auch in Form einer Kugel bzw. Halbkugel vorgesehen sein. Bevorzugt umfasst das innerhalb der Grillgutträgerschale 12a anordbare Stützelement 34 eine Bodenplatte 36, welche zu den Positionierungsmitteln 30 und 32 komplementär ausgebildete Ausnehmungen 38 und 40 aufweist, sodass nach dem Einlegen der Bodenplatte 36 diese im Wesentlichen verschiebungsfrei in der Grillgutträgerschale 12a angeordnet ist.

Zudem umfasst das Stützelement 34 eine schaftartige Verlängerung 42, welche sich vertikal nach oben erstreckt, und deren freies Ende 44 in diesem Beispiel als abgerundete Halbkugel ausgebildet ist. An dieser schaftartigen Verlängerung 42 ist schematisch das Grillgut 43 angeordnet. Es ist denkbar, dass innerhalb dieses schaftartigen Elements 42, welches hier einen zylindrisch angeordneten Mantel 46 aufweist, wenigstens ein Heizelement angeordnet ist (nicht gezeigt). Dieses Heizelement kann beispielsweise in Spiralform angeordnet sein.

Bevorzugt weist die schaftartige Verlängerung 42 eine vertikale Länge L im Bereich von 7 - 25 cm, bevorzugt von 10 - 18 cm, auf und eine Breite B im Bereich von 2 - 8 cm, bevorzugt im Bereich von 3 - 6 cm.

Wird das Grillgutträgerelement 12 selbst schalenförmig ausgebildet und wird auf eine separate Grillgutträgerschale 12a verzichtet, so ist die oben ausgeführte Fixierung des Stützelements 34 analog auf das Grillgutträgerelement 12 anwendbar.

Fig. 8a zeigt eine schematische Seitenansicht einer weiteren vorteilhaften Ausbildung des Grillgutträgerelements 12 mit einem Stützelement 34, welches eine Bodenplatte 36 umfasst. Die Fixierung des Stützelements 34 ist hier zur Vereinfachung nicht erneut dargestellt. Es wird auf die oben beschriebene Ausführung, insbesondere in Fig. 7, verwiesen. Das Stützelement 34 umfasst weiterhin drei sich nach oben erstreckende schaftartige Verlängerungen 42, deren Anordnung in der Draufsicht in Fig. 8b verdeutlicht ist. Bevorzugt erfolgt die dreieckige Anordnung der schaftartigen Verlängerungen 42 auf der Bodenplatte 36 derart, dass in dem aufgespannten Zwischenbereich 45 das Grillgut (nicht gezeigt) anord- und fixierbar ist. Die schaftartigen Verlängerungen 42 sind bevorzugt zylindrisch ausgebildet und weisen an ihrem nach oben gerichteten freien Ende jeweils einen abgeschrägten Flächenbereich 90 auf. Bevorzugt sind diese Flächenbereiche 90 einander zugewandt. Vorteilhaft erfolgt die Abschrägung in einem Winkel zwischen 20 - 80°, meist bevorzugt zwischen 30 - 50°. Diese Abschrägung ist insbesondere von Vorteil, da hierdurch das in dem Zwischenbereich 45 anordbare Grillgut leicht positionierbar und während des Grillvorgangs fixierbar ausgebildet ist.

Das hier beschriebene Grillgutträgerelement 12 erweist sich besonders vorteilhaft zum Grillen von Haxen oder Backschinken. Durch die sich nach oben erstreckenden, schaftartigen Verlängerungen 42 wird das Grillgut derart gehalten, sodass insbesondere im Bodenbereich der Grillgutträgerschale eine verbesserte Hitzezirkulation stattfindet, sodass das Grillgut auch von unten gegart und gegrillt wird. Selbstverständlich ist die Ausführung nicht auf lediglich drei schaftartige Verlängerungen begrenzt, sondern, in Abhängigkeit der Größe des Grillguts, beliebig erweiterbar.

Darüber hinaus ist denkbar, bevorzugt wenigstens zwei schaftartige Verlängerungen 42 vorzusehen und diese bevorzugt mit einem Trägerelement, welches im einfachsten Fall als Trägerring (nicht gezeigt) ausgebildet ist, verbunden vorzusehen. Das Grillgut wird auf dem Trägerring positioniert und durch die sich nach oben erstreckenden schaftartigen Verlängerungen 42 von der Grillgutträgerschale beabstandet, sodass auch weiterhin eine Hitzezirkulation begünstigt ist. Das Trägerelement ist bevorzugt aus Metall und/oder Kunststoff und/oder Kompositmaterial und/oder einer Mischung hieraus ausgebildet. Besonders vorteilhaft erweist sich neben Metall auch hitzebeständiger Kunststoff.

In Fig. 9 ist ein schematischer Aufbau eines Grillgeräts 47 gezeigt, in welchem lediglich eine nicht erfindungsgemässe Grillvorrichtung 1 vorgesehen ist. Die Grillvorrichtung 1 selbst umfasst, wie in der Fig. 1 gezeigt, einen Halterahmen 2 sowie ein erstes Halterahmenelement 4 und ein zweites Halterahmenelement 6. Die in dem Halterahmen 2 angeordneten Grillgutträgerelemente sind hier der Einfachheit halber nicht gezeigt. Die Grillgutvorrichtung 1 weist bevorzugt an ihrem Verbindungselement 8, bevorzugt an beiden Verbindungselementen 8, 10, ein Haltemittel 21 auf, mittels welchem die Grillvorrichtung 1 an der Aufnahmeeinrichtung 50 lösbar anordbar ist. Die Antriebseinrichtung (hier nicht gezeigt) bedingt eine Rotation der Grillvorrichtung 1 um deren vertikale Längsachse A.

In diesem Ausführungsbeispiel umfasst das Gehäuse des Grillgeräts 47 ein U-förmig ausgebildetes Heizelement 52, welches aus insgesamt drei flächenartigen Heizabschnitten 54, 56, 58 besteht. Bevorzugt ist denkbar, dass die Grillvorrichtung 1 zudem ein Widerlager 60 aufweist, sodass eine gleichmäßige Rotation ermöglicht wird. Selbstverständlich ist dies nur als Beispiel zu sehen. Es sind darüber hinaus auch Grillgeräte denkbar, welche eine Vielzahl an Grillvorrichtungen 1 aufnehmen können, um entsprechend große Mengen an Grillgut gleichzeitig fertig zu stellen.

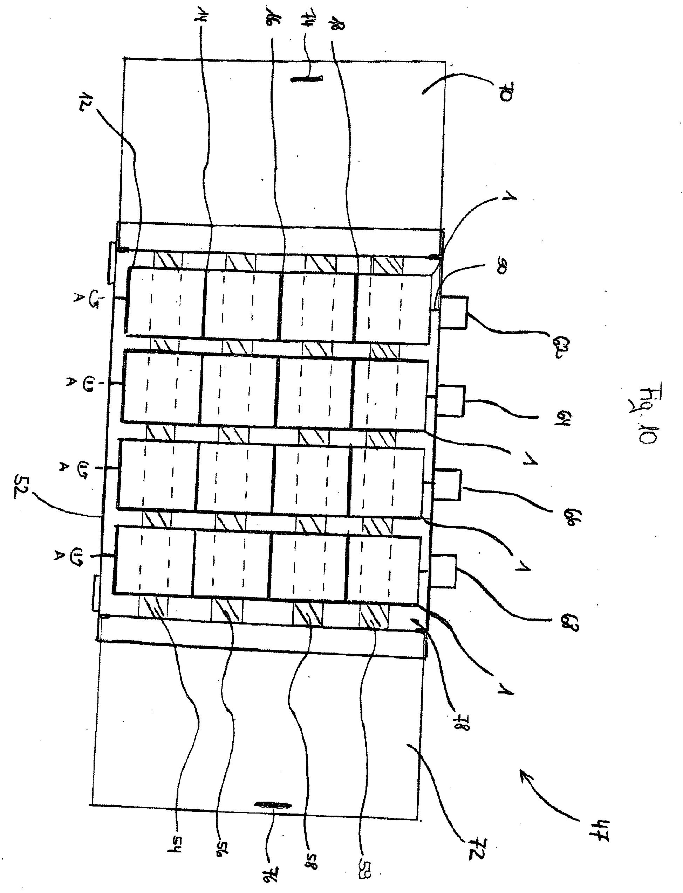

In Fig. 10 ist ein weiteres Grillgerät 47 gezeigt, welches ein Grillgehäuse 52 sowie insgesamt vier darin angeordnete nicht erfindungsgemässe Grillvorrichtungen 1 umfasst. Die vier Grillvorrichtungen 1 sind hier in Reihe nebeneinander angeordnet. Zur besseren Verständlichkeit werden Grillgutträgerschalen und Grillgut hier nicht dargestellt. Es ist jedoch selbstverständlich, dass für das hier beschriebene Grillgerät 47 die oben beschriebenen Grillgutträgerschalen bzw. schalenartig ausgebildete Grillgutträgerelemente vorzusehen sind. Das Grillgehäuse 52 umfasst bevorzugt mehrere, horizontal angeordnete Heizelemente 54, 56, 58, 59. Die Grillvorrichtungen 1 sind mittels Haltemittel 21 (nicht gezeigt), welches bevorzugt als hakenartiges Element ausgebildet ist, aufgehangen. Das Haltemittel 21 (nicht gezeigt) dient als Bindeglied zwischen Grillvorrichtung 1 und Aufnahmeeinrichtung 50.

Die Aufnahmeeinrichtung 50 ist jeweils mit einer Antriebseinrichtung 62, 64, 66, 68 verbunden. Als Antriebseinrichtung wird bevorzugt ein Motorantrieb verstanden, mittels welchem die jeweilige Grillvorrichtung 1 um ihre jeweilige Längsachse A rotierbar ist. Es ist denkbar, dass jede Grillvorrichtung 1 eine separate Antriebseinrichtung 62, 64, 66, 68 aufweist, so dass die hier gezeigten vier Grillvorrichtungen 1 in unterschiedlicher, von einander unabhängiger Geschwindigkeit rotierbar sind. Ferner ist ebenfalls bevorzugt, dass lediglich eine Antriebseinrichtung 62 für alle Grillvorrichtungen 1 vorgesehen ist, so dass alle Grillvorrichtungen 1 mit der gleichen Rotationsgeschwindigkeit beaufschlagt werden. Vorteilhaft erfolgt der Antrieb der einzelnen Grillvorrichtungen 1 über einen Zahnriemen (nicht gezeigt), welcher von der einen Antriebseinrichtung 62 angetrieben wird.

Weiterhin vorteilhaft umfasst das Grillgehäuse 52 wenigstens eine, bevorzugt zwei, beweglich angeordnete Seitenflächen 70, 72, welche meist bevorzugt schwenkbar am Grillgehäuse 52 angeordnet sind. Die Seitenflächen 70, 72 weisen bevorzugt zwei Griffelemente 74, 76 auf, mittels welchen die beiden Seitenflächen 70, 72 verschwenkbar sind. Bei dem in Fig. 6 dargestellten Grillgehäuse 52 sind die beiden Seitenflächen 70, 72 im geöffneten Zustand nach außen geschwenkt gezeigt. In diesem Zustand erfolgt die Bestückung der Grillvorrichtungen 1. Sind alle Grillvorrichtungen 1 mit Grillgut (nicht gezeigt) bestückt, so werden die beiden Seitenflächen 70, 72 nach innen geschwenkt und der Grillraum 78 wird geschlossen. Unter Grillraum 78 ist der Raum zu verstehen, in welchem die Grillvorrichtungen 1 angeordnet sind. Die schwenkbare Anordnung der beiden Seitenflächen 70, 72 erweist sich als vorteilhaft, da das Grillgut in einem nahezu geschlossenen Grillraum 78 gegrillt wird und sich somit die Grillzeit deutlich verkürzt im Gegensatz zu offenen Grillgeräten aus dem Stand der Technik. Bevorzugt sind die Seitenflächen 70, 72 aus hitzebeständigem, durchsichtigem Material ausgebildet, so dass das Grillgut jederzeit sichtbar und überprüfbar ist, ohne dass das Grillgehäuse 52 geöffnet werden muss. Die Seitenflächen 70, 72 sind bevorzugt türenartig ausgebildet.

Selbstverständlich sind die in Fig. 9 und Fig. 10 gezeigten Grillvorrichtungen 1, welche einen rechteckigen Halterahmen aufweisen, durch die oben beschriebene erfindungsgemässe Grillvorrichtung 1 austauschbar, welche einen U-förmigen Halterahmen aufweist, wie in Fig. 4 dargestellt.

### Bezugszeichenliste

- 1: Grillvorrichtung
- 2: Halterahmen
- 4: erstes Halterahmenelement
- 6: zweites Halterahmenelement
- 8: Verbindungselement
- 10: weiteres Verbindungselement
- 12, 14, 16, 18: Grillgutträgerelement
- 12a, 14a, 16a, 18a: Grillgutträgerschale
- 19: Ausnehmung
- 21: Haltemittel
- 22: drittes Halterahmenelement
- 23: Erhebung
- 24: Randbereich
- 28: Mantelbereich
- 30, 32: Positionierungsmittel
- 34: Stützelement
- 36: Bodenplatte
- 38, 40: Ausnehmung
- 42: schaftartige Verlängerung
- 44: freies Ende
- 45: Zwischenraum
- 46: Mantel
- 50: Aufnahmeeinrichtung
- 52: Heizelement
- 54, 56, 58, 59: flächenartiger Heizabschnitt
- 60: Widerlager
- 62, 64, 66, 68: Antriebseinrichtung
- 70, 72: Seitenfläche
- 74, 76: Griffelement
- 78: Grillraum
- 80: Öffnung
- 81: Befestigungsmittel
- 82: Fixierungsabschnitt
- 84: Kupplungselement
- 86: Vorsprung
- 88: weitere Öffnung
- 90: Flächenbereich
- B: Breite
- H: Höhe
- L: Länge
- A: Längsachse

## Patentansprüche

1. Grillvorrichtung (1) zum Grillen von Grillgut (43), insbesondere Geflügel, umfassend wenigstens einen Halterahmen (2), umfassend
a. genau ein Halterahmenelement (4) sowie
b. zwei Verbindungselemente (8; 10), welche über das Halterahmenelement (4) voneinander beabstandet angeordnet sind, sowie
c. wenigstens ein an dem Halterahmen (2) angeordnetes Grillgutträgerelement (12) zur Aufnahme des Grillguts (43),
wobei die Grillvorrichtung (1) während des Grillvorgangs um eine vertikale Längsachse (A) rotierbar ausgebildet ist, und die Anordnung von Halterahmenelement (4) und den beiden daran anschließenden Verbindungselementen (8, 10) U-förmig ausgebildet ist, wobei sich während des Grillvorgangs eine seitliche Öffnung des Halterahmens (2) bedingt.

2. Grillvorrichtung (1) nach Anspruch 1,
**dadurch gekennzeichnet, dass**
mehrere Grillgutträgerelemente (12, 14, 16, 18) vertikal voneinander beabstandet an dem Halterahmen (2) angeordnet sind.

3. Grillvorrichtung (1) nach wenigstens einem der Ansprüche 1 - 2,
**dadurch gekennzeichnet, dass**
das wenigstens eine Grillgutträgerelement (12) wenigstens eine Grillgutträgerschale (12a) zur Aufnahme von Grillflüssigkeit während des Grillvorgangs umfasst.

4. Grillvorrichtung (1) nach Anspruch 3,
**dadurch gekennzeichnet, dass**
die wenigstens eine Grillgutträgerschale (12a) einen sich nach oben erweiternden, umfangsseitig erstreckenden Randbereich (24) aufweist.

5. Grillvorrichtung (1) nach Anspruch 1,
**dadurch gekennzeichnet, dass**
das wenigstens eine Grillgutträgerelement (12) wenigstens ein Positionierungsmittel (30) zur lösbaren Anordnung wenigstens eines Stützelements (34) innerhalb eines Grillgutträgerelements (12) umfasst.

6. Grillvorrichtung (1) nach Anspruch 5,
**dadurch gekennzeichnet, dass**
das Stützelement (34) wenigstens eine Bodenplatte (40) sowie eine daran angeordnete schaftartige Verlängerung (42) umfasst.

7. Grillvorrichtung (1) nach Anspruch 5,
**dadurch gekennzeichnet, dass**
das wenigstens eine Positionierungsmittel (30) als ein sich vertikal nach oben erstreckenden Vorsprung, bevorzugt mehrere derartiger Vorsprünge, welche voneinander beabstandet angeordnet sind, ausgebildet ist.

8. Grillvorrichtung (1) nach wenigstens einem der Ansprüche 5 bis 7,
**dadurch gekennzeichnet, dass**
das wenigstens eine Stützelement (34) wenigstens eine Ausnehmung (38) aufweist, welche komplementär zu dem wenigstens einen Positionierungsmittels (30) der Grillgutträgerschale (12a) ausgebildet ist, sodass letzteres zur lösbaren Fixierung von Stützelement (34) und Grillgutträgerschale (12a) aneinander, zumindest teilweise in die wenigstens eine Ausnehmung (38) einführbar ist.

9. Grillvorrichtung (1) nach einem der Ansprüche 5 bis 8,
**dadurch gekennzeichnet, dass**
das Stützelement (34) bevorzugt aus Wärme leitfähigem Material ausgebildet ist.

10. Grillgerät (1) zum Grillen von Grillgut, insbesondere Geflügel, umfassend ein Grillgehäuse (52) mit wenigstens einem Heizelement (59), wenigstens eine Grillvorrichtung (1) nach wenigstens einem der voran gegangenen Ansprüche 1 - 9, eine Antriebseinrichtung zur Rotation der Grillvorrichtung (1) sowie wenigstens eine Aufnahmeeinrichtung (50) zur lösbaren Fixierung der Grillvorrichtung (1) an dem Grillgehäuse (52).

## Claims

1. Grilling device (1) for grilling grill food (43), in particular poultry, comprising at least one holding frame (2), comprising
a. exactly one holding frame element (4) and
b. two connecting elements (8; 10) being arranged spaced apart from one another by the holding frame element (4), and
c. at least one grill food carrier element (12) arranged on the holding frame (2) for receiving the grill food (43),
wherein the grilling device (1) is rotatable during the grilling process about a vertical longitudinal axis (A), and the arrangement of the holding frame element (4) and the two connecting elements (8, 10) adjoining it is U-shaped, causing a lateral opening of the holding frame (2) during the grilling process.

2. Grilling device (1) according to claim 1,
**characterized in that**
at a plurality of grill food carrier elements (12, 14, 16, 18) are arranged on the holding frame (2) vertically spaced apart from each other.

3. Grilling device (1) according to at least one of claims 1-2,
**characterized in that**
the at least one grill food carrier element (12) comprises at least one grill food carrier tray (12a) for receiving grill liquid during the grilling process.

4. Grilling device (1) according to claim 3,
**characterized in that**
the at least one grill food carrier tray (12a) has an upwardly flared, peripherally extending edge region (24).

5. Grilling device (1) according to claim 1,
**characterized in that**
the at least one grill food carrier element (12) comprises at least one positioning means (30) for releasably arranging at least one support element (34) within the grill food carrier element (12).

6. Grilling device (1) according to claim 5,
**characterized in that**
the support element (34) comprises at least one bottom plate (40) and a shaft-like extension (42) arranged thereon.

7. Grilling device (1) according to claim 5,
**characterized in that**
the at least one positioning means (30) is formed as a vertically upwardly extending projection, preferably a plurality of such projections, which are arranged spaced from each other.

8. Grill device (1) according to at least one of the claims 5 to 7,
**characterized in that**
the at least one support element (34) has at least one recess (38) which is complementary formed to the at least one positioning means (30) of the grill food carrier tray (12a) is formed, so that the positioning means (30) can be inserted at least partially into the at least one recess (38) for releasably fixing of the support element (34) and grill food carrier tray (12a) to each other.

9. Grill device (1) according to one of the claims 5 to 8,
**characterized in that**
the support element (34) is formed of a heat-conductive material.

10. Grill appliance (47) for grilling grill food, in particular poultry, comprising a grill housing (52) with at least one heating element (59), at least one grill device (1) according to at least one of the preceding claims 1-9, a drive device for rotating the grill device (1) and at least one receiving device (50) for releasably fixing the grill device (1) to the grill housing (52).

## Revendications

1. [Dispositif de barbecue (1) pour griller des aliments à griller (43), en particulier de la volaille, comprenant au moins un cadre de maintien (2), comprenant
a. exactement un élément de cadre de maintien (4) et
b. deux éléments de connexion (8; 10) qui sont arrangés espacés l'un de l'autre par l'élément de cadre de maintien (4) et
c. au moins un élément porteur d'aliments à griller (12) destiné à recevoir les aliments à griller (43) disposé sur le cadre de maintien (4),
le dispositif de barbecue (1) pouvant tourner pendant le processus de grillage autour d'un axe longitudinal vertical (A), et l'agencement de l'élément de cadre de support (4) et des deux éléments de connexion (8, 10) adjacents étant en forme de U, créant une ouverture latérale du cadre de maintien (2) pendant le processus de grillage.

2. Dispositif de barbecue (1) selon la revendication 1,
**caractérisé en ce que**
plusieurs éléments porteurs d'aliments à griller (12, 14, 16, 18) sont disposés espacés verticalement les uns des autres sur le cadre de maintien (2).

3. Dispositif de barbecue (1) selon au moins l'une des revendications 1 à 2,
**caractérisé en ce que**
le au moins un élément porteur d'aliments à griller (12) comprend au moins un plat porteur d'aliments à griller (12a) destiné à recevoir du liquide de gril pendant le processus de grillage.

4. Dispositif de barbecue (1) selon la revendication 3,
**caractérisé en ce que**
le au moins un plat porteur d'aliments à griller (12a) a une région de bord (24) s'étendant le long la circonférence vers le haut, évasée vers le haut.

5. Dispositif de barbecue (1) selon la revendication,
**caractérisé en ce que**
le au moins un élément porteur d'aliments à griller (12) comprend au moins un moyen de positionnement (30) pour agencer de manière amovible au moins un élément de support (34) à l'intérieur de l'élément porteur d'aliments à griller (12).

6. Dispositif de barbecue (1) selon la revendication 5,
**caractérisé en ce que**
l'élément de support (34) comprend au moins une plaque inférieure (40) et un prolongement en forme de tige (42) agencé sur celle-ci.

7. Dispositif de barbecue (1) selon la revendication 5,
**caractérisé en ce que**
le au moins un moyen de positionnement (30) est formé en tant que saillie s'étendant verticalement vers le haut, de préférence en une pluralité de telles saillies, qui sont espacées les unes des autres.

8. Dispositif de barbecue (1) selon au moins l'une des revendications 5 à 7,
**caractérisé en ce que**
le au moins un élément de support (34) présente au moins un évidement (38) complémentaire du au moins un moyen de positionnement (30) du plat porteur d'aliments à griller (12a), afin que le moyen de positionnement (30) puisse être inséré au moins partiellement dans l'au moins un évidement (38) pour la fixation amovible de l'élément de support (34) au plat porteur d'aliments à griller (12a).

9. Dispositif de barbecue (1) selon l'une des revendications 5 à 8,
**caractérisé en ce que**
l'élément de support (34) est de formé d'un matériau thermoconducteur.

10. Appareil de barbecue (47) pour griller des aliments à griller, en particulier de la volaille, comprenant un boîtier de barbecue (52) avec au moins un élément chauffant (59), au moins un dispositif de barbecue (1) selon au moins l'une des revendications précédentes 1 à 9, un dispositif d'entraînement pour faire tourner le dispositif de barbecue (1) et au moins un dispositif de réception (50) pour fixer de manière amovible le dispositif de barbecue (1) au boîtier de barbecue (52).]
